# FASCICULE DE BREVET EUROPEEN

(11) **EP 1 271 052 B1**
(45) Date de publication et mention de la délivrance du brevet: **19.11.2008**
(21) Numéro de dépôt: 02291401.4
(22) Date de dépôt: 06.06.2002
(51) Int. Cl.: F23D 14/66, F23C 3/00, F23L 15/04

(54) **Dispositif radiant à brûleur de gaz et recirculation avec production réduite d'oxydes d'azote**
Abgasrückführungsstrahlrohrbrenner mit niedrigem NOx-Ausstoss
Radiant tube burner with flue gas recirculation having reduced NOx production

(30) Priorité: 29.06.2001 FR 0108665
(43) Date de publication de la demande: 02.01.2003
(73) Titulaire: Gaz de France (GDF) Service National, 75017 Paris (FR)
(72) Inventeur: Landais, Thierry, 75019 Paris (FR); Bellin-Croyat, Thierry, 95160 Montmorency (FR)
(74) Mandataire: Thinat, Michel

(56) Documents cités:
- DE-A- 4 420 477
- FR-A- 2 616 520
- GB-A- 824 010
- US-A- 5 570 679

## Description

L'invention concerne, de façon générale, un système de brûleur de gaz à tube radiant, dit "en doigt de gant", permettant une vitesse élevée de sortie des gaz brûlés.

Plus précisément, l'invention concerne un dispositif radiant à brûleur de gaz et recirculation de gaz brûlés pour le chauffage d'une enceinte délimitée par une paroi, ce dispositif comprenant, suivant une direction axiale longitudinale, une section externe à l'enceinte et une section à la fois interne à l'enceinte et divisée en trois sous-sections internes se succédant l'une à l'autre à distance croissante de la paroi et, suivant une direction radiale centripète, une enveloppe comprenant un carter externe et un tube enveloppe interne dont une extrémité distante de la paroi est fermée, un échangeur disposé dans l'enveloppe et s'étendant sur une partie de la section externe et sur les deux premières sections internes, un tube de recirculation s'étendant sur la troisième section interne à distance radiale du tube enveloppe et présentant des extrémités entrante et sortante ouvertes respectivement relativement proche et relativement éloignée de la paroi de l'enceinte, un tube de maintien interne à l'échangeur et s'étendant sur une partie de la section externe et sur la première section interne, un tube foyer disposé dans l'échangeur, maintenu par le tube de maintien dans le prolongement de ce dernier et s'étendant sur la seconde section interne, et un tube central d'injection transportant du gaz, s'étendant au moins dans le tube de maintien, et traversant une cloison séparant le tube de maintien du tube foyer, l'échangeur comprenant un tube séparateur définissant avec le tube de maintien et le tube foyer un trajet d'admission d'air prenant naissance dans une entrée d'admission percée dans le carter et aboutissant à des orifices d'admission percés dans le tube foyer, le tube séparateur définissant avec l'enveloppe un trajet d'évacuation de fumées aboutissant à une sortie d'évacuation percée dans le carter, et le tube foyer se terminant par une buse disposée en regard de l'extrémité entrante du tube de recirculation.

Un dispositif de ce type est connu dans l'art antérieur tel qu'illustré notamment par les documents de brevets FR 2 616 518 et FR 2 616 520, et utilisé depuis de nombreuses années avec succès.

Compte tenu précisément de l'ancienneté relative de leur conception, ces dispositifs devaient nécessairement faire l'objet d'une nouvelle étude, justifiée par le constant souci de réduire les émissions d'oxydes d'azote dont les conditions de formation sont aujourd'hui mieux connues que par le passé.

Néanmoins, dans la mesure où ces dispositifs ont une durée de vie élevée et ont été installés en nombre important, la conception de nouveaux dispositifs à émission réduite d'oxydes d'azote devait également résoudre le problème que pose la réhabilitation de dispositifs anciens.

Or, ce contexte exclut en pratique le recours aux solutions connues pour réduire les émissions d'oxydes d'azote, et qui consistent soit à prévoir un injecteur mobile comme décrit par exemple dans le document de brevet DE 44 20 140, soit à prévoir des moyens pour déplacer physiquement la zone de combustion, comme décrit par exemple dans le document de brevet US 5 570 679.

Dans ces conditions, l'invention a donc pour but de proposer un dispositif qui d'une part n'émette qu'un taux négligeable d'oxydes d'azote et qui d'autre part ne diffère d'un dispositif connu que par des adaptations tout à fait mineures au plan structurel.

A cette fin, le dispositif de l'invention, par ailleurs conforme à la définition générique qu'en donne le préambule ci-dessus, est essentiellement caractérisé en ce que le tube central d'injection est alimenté par deux conduits dont le premier transporte au moins du gaz et dont le second transporte au moins de l'air, en ce que le tube central d'injection aboutit à un brûleur disposé dans le tube foyer et débouchant au niveau de la buse, et en ce qu'une valve est interposée sur l'un au moins des conduits, à l'extérieur du carter.

Selon un mode possible de réalisation de l'invention, le premier conduit transporte par exemple du gaz et le second conduit de l'air, le tube central d'injection étant alors constitué par une canne d'injection unique dans laquelle débouchent les premier et second conduits.

Dans ce cas, il convient au moins que la valve précédemment mentionnée soit interposée sur le second conduit, pour contrôler le débit de l'air.

Selon un autre mode possible de réalisation de l'invention, le premier conduit transporte par exemple du gaz et le second conduit un mélange d'air et de gaz, le tube central d'injection étant alors constitué par deux cannes d'injection concentriques dans lesquelles les premier et second conduits débouchent de façon respective.

Dans ce cas, il convient au moins que la valve précédemment mentionnée soit interposée sur le premier conduit, pour contrôler le débit du gaz.

D'autres caractéristiques et avantages de l'invention ressortiront clairement de la description qui en est faite ci-après, à titre indicatif et nullement limitatif, en référence aux dessins annexés, dans lesquels:
- la Figure 1 est une coupe longitudinale d'un dispositif connu; et
- la Figure 2 est une coupe longitudinale d'un dispositif conforme à l'invention, résultant d'une adaptation du dispositif connu de la figure 1.

Comme indiqué précédemment, l'invention concerne un dispositif radiant à brûleur de gaz et à recirculation de gaz brûlés, permettant de chauffer une enceinte 1 délimitée par une paroi 10 isolante.

Ce dispositif s'étend de façon générale suivant une direction axiale longitudinale L le long de laquelle il présente une section Se externe à l'enceinte 1 et une section Si interne à l'enceinte.

Comme le montrent les deux figures, la section interne Si est elle-même divisée en trois sous-sections internes Si1, Si2, et Si3 qui se succèdent l'une à l'autre à distance croissante de la paroi 10.

Ce dispositif est par ailleurs formé de plusieurs couches se succédant suivant une direction radiale centripète R, c'est-à-dire depuis la couche la plus superficielle vers la plus profonde.

En superficie, le dispositif est délimité par une enveloppe 2, qui comprend un carter 21 externe à l'enceinte 1, et un tube enveloppe 22 interne à l'enceinte 1, le tube enveloppe présentant, à distance de la paroi 10, une extrémité fermée 220.

Dans la couche succédant immédiatement à l'enveloppe 2 est disposé un échangeur 3, auquel succède un tube de recirculation 4.

Comme le montrent les figures, l'échangeur 3 s'étend sur une partie de la section externe Se et sur les deux premières sections internes Si1 et Si2, tandis que le tube de recirculation 4 s'étend sur la troisième section interne Si3, à distance radiale du tube enveloppe 22.

Le tube de recirculation 4 présente une extrémité entrante 41 relativement proche de la paroi 10 de l'enceinte et une extrémité sortante 42 relativement éloignée de cette paroi 10, ces deux extrémités étant ouvertes.

Ce tube de recirculation 4, qui est par exemple réalisé en céramique, est maintenu radialement dans le tube enveloppe 22 au moyen de pièces de liaison 40, également en céramique, et de façon telle que son extrémité sortante 42 soit dégagée de l'extrémité 220 du tube enveloppe.

A l'intérieur de l'échangeur 3 se trouvent un tube de maintien 5 et un tube foyer 6.

Le tube de maintien 5 s'étend sur une partie de la section externe Se et sur la première section interne Si1 et maintient dans son prolongement le tube foyer 6 qui s'étend quant à lui sur la seconde section interne Si2.

Enfin, un tube central d'injection 7, qui transporte du gaz, s'étend dans le tube de maintien 5 et traverse une cloison 56 séparant le tube de maintien 5 du tube foyer 6.

L'échangeur 3 comprend un tube séparateur 30 doté d'ailettes 31 qui le maintiennent entre l'enveloppe 2 d'une part, et le tube de maintien 5 et le tube foyer 6 d'autre part.

Le tube séparateur 30 coopère avec le tube de maintien 5 et le tube foyer 6 pour définir un trajet T1 d'admission d'air qui prend naissance dans une entrée d'admission 211 percée dans le carter 21, et qui aboutit à des orifices d'admission d'air 60 percés dans le tube foyer 6.

Par ailleurs, le tube séparateur 30 coopère avec l'enveloppe 2 pour définir un trajet T2 d'évacuation de fumées, qui aboutit à une sortie d'évacuation 212 percée dans le carter 21.

Enfin, comme le montrent les figures, le tube foyer 6 se termine par une buse 61 qui est disposée en regard de l'extrémité entrante 41 du tube de recirculation 4.

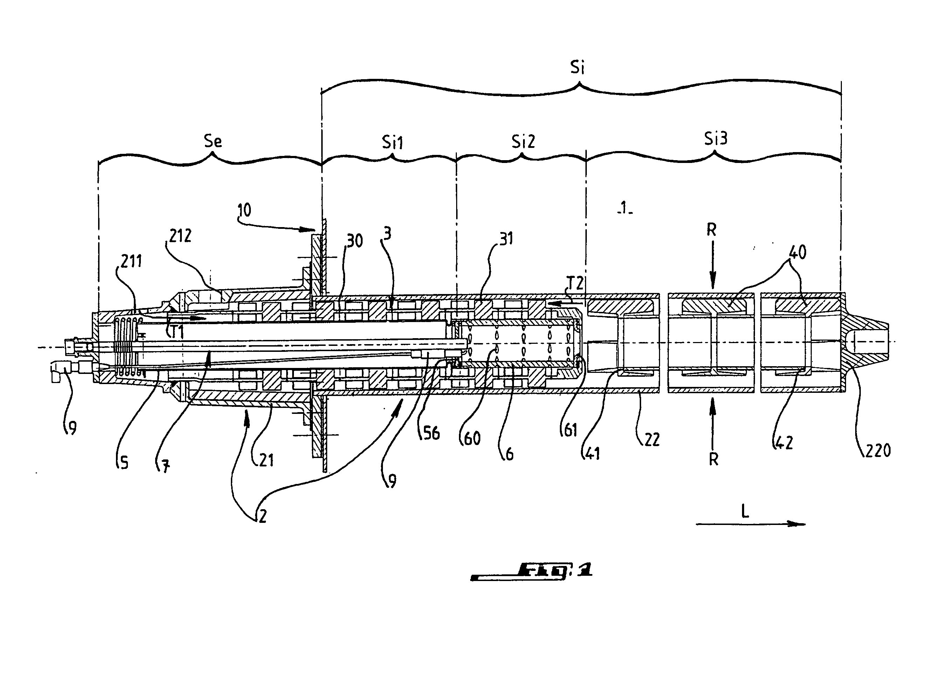

Dans le cas du dispositif connu (figure 1), le tube central d'injection 7 débouche, juste derrière la cloison 56, dans le tube foyer 6 dont l'intérieur forme une chambre de combustion, un système d'allumage haute tension 9 étant prévu pour permettre la mise à feu du gaz à la sortie du tube d'injection 7.

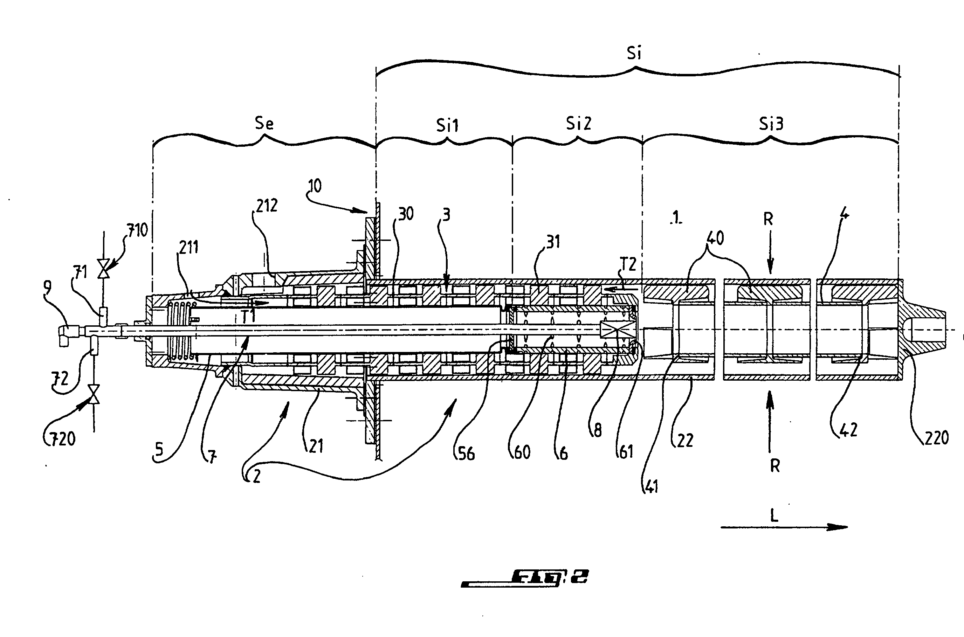

Par rapport à cet agencement connu, le dispositif de l'invention (figure 2) ne comprend que très peu de différences structurelles.

Tout d'abord, au lieu de n'être alimenté que par du gaz, le tube central d'injection 7 est alimenté par deux conduits 71 et 72, dont le premier 71 transporte au moins du gaz et dont le second 72 transporte au moins de l'air.

D'autre part, ce tube central d'injection 7 aboutit à un brûleur 8 qui est disposé dans le tube foyer 6 et qui débouche au niveau de la buse 61, c'est-à-dire dont la sortie se situe au ras de la buse 61.

Enfin, à l'extérieur du carter 21, une valve, telle que 710 et 720, est interposée sur l'un des conduits, et de préférence sur chacun des conduits 71 et 72.

Le dispositif de l'invention peut être mis en oeuvre selon deux modes de fonctionnement différents, correspondant à deux variantes structurelles, et dont chacun présente deux phases successives.

Dans la première variante, le premier conduit 71 transporte du gaz, le second conduit 72 transporte de l'air, et le tube central d'injection 7 est constitué par une canne d'injection unique, dans laquelle débouchent les conduits 71 et 72.

Dans la première phase de mise en oeuvre de cette première variante, les deux valves 710 et 720 sont ouvertes à débit modéré, et le tube central d'injection 7 transporte jusqu'au brûleur 8, sous forme d'un mélange, le gaz et l'air qu'il reçoit.

La seconde phase commence lorsque la température dans la troisième section Si3 a atteint une valeur permettant d'assurer la stabilité d'une flamme intense.

La valve d'air 720 est alors fermée, la valve de gaz 710 est ouverte à débit maximal, et la dépression qui en résulte au niveau de la buse 61 crée un appel d'air très puissant à travers l'admission d'air 211, le dispositif fonctionnant dès lors à plein régime.

Dans la deuxième variante, le premier conduit 71 transporte du gaz, le second conduit 72 transporte un mélange d'air et de gaz, et le tube central d'injection 7 est constitué par deux cannes d'injection concentriques dans lesquelles les conduits 71 et 72 débouchent de façon respective.

Dans la première phase de mise en oeuvre de cette seconde variante, la valve 710 est fermée, la valve 720 est ouverte, et le tube central d'injection 7 transporte jusqu'au brûleur 8 le mélange d'air et de gaz qu'il reçoit du conduit 72.

La seconde phase commence lorsque la température dans la troisième section Si3 a atteint une valeur permettant d'assurer la stabilité d'une flamme intense.

La valve de gaz 710 est alors ouverte à débit maximal, et la dépression qui en résulte au niveau de la buse 61 crée un appel d'air très puissant à travers l'admission d'air 211, le dispositif fonctionnant dès lors à plein régime.

## Revendications

1. Dispositif radiant à brûleur de gaz et recirculation de gaz brûlés pour le chauffage d'une enceinte (1) délimitée par une paroi (10), ce dispositif comprenant, suivant une direction axiale longitudinale (L), une section (Se) externe à l'enceinte (1) et une section (Si) à la fois interne à l'enceinte et divisée en trois sous-sections internes (Si1, Si2, Si3) se succédant l'une à l'autre à distance croissante de la paroi (10) et, suivant une direction radiale centripète (R), une enveloppe (2) comprenant un carter externe (21) et un tube enveloppe interne (22) dont une extrémité (220) distante de la paroi (10) est fermée, un échangeur (3) disposé dans l'enveloppe (2) et s'étendant sur une partie de la section externe (Se) et sur les deux premières sections internes (Si1, Si2), un tube de recirculation (4) s'étendant sur la troisième section interne (Si3) à distance radiale du tube enveloppe (22) et présentant des extrémités entrante (41) et sortante (42) ouvertes respectivement relativement proche et relativement éloignée de la paroi (10) de l'enceinte, un tube de maintien (5) interne à l'échangeur (3) et s'étendant sur une partie de la section externe (Se) et sur la première section interne (Si1), un tube foyer (6) disposé dans l'échangeur (3), maintenu par le tube de maintien (5) dans le prolongement de ce dernier et s'étendant sur la seconde section interne (Si2), et un tube central d'injection (7) transportant du gaz, s'étendant au moins dans le tube de maintien (5), et traversant une cloison (56) séparant le tube de maintien (5) du tube foyer (6), l'échangeur (3) comprenant un tube séparateur (30) définissant avec le tube de maintien (5) et le tube foyer (6) un trajet (T1) d'admission d'air prenant naissance dans une entrée d'admission (211) percée dans le carter (21) et aboutissant à des orifices d'admission (60) percés dans le tube foyer (6), le tube séparateur (30) définissant avec l'enveloppe (2) un trajet (T2) d'évacuation de fumées aboutissant à une sortie d'évacuation (212) percée dans le carter (21), et le tube foyer (6) se terminant par une buse (61) disposée en regard de l'extrémité entrante (41) du tube de recirculation (4), **caractérisé en ce que** le tube central d'injection (7) est alimenté par deux conduits (71, 72) dont le premier (71) transporte au moins du gaz et dont le second (72) transporte au moins de l'air, **en ce que** le tube central d'injection (7) aboutit à un brûleur (8) disposé dans le tube foyer (6) et débouchant au niveau de la buse (61), et **en ce qu'**une valve (710, 720) est interposée sur l'un (72) au moins des conduits (71, 72), à l'extérieur du carter (21).

2. Dispositif suivant la revendication 1, **caractérisé en ce que** le premier conduit (71) transporte du gaz, **en ce que** le second conduit (72) transporte de l'air, et **en ce que** le tube central d'injection (7) est constitué par une canne d'injection unique dans laquelle débouchent les premier et second conduits (71, 72).

3. Dispositif suivant la revendication 2, **caractérisé en ce que** la valve (720) est interposée sur le second conduit (72) pour contrôler le débit de l'air.

4. Dispositif suivant la revendication 1, **caractérisé en ce que** le premier conduit (71) transporte du gaz, **en ce que** le second conduit (72) transporte un mélange d'air et de gaz, et **en ce que** le tube central d'injection (7) est constitué par deux cannes d'injection concentriques dans lesquelles les premier et second conduits (71, 72) débouchent de façon respective.

5. Dispositif suivant la revendication 4, **caractérisé en ce que** la valve (710) est interposée sur le premier conduit (71) pour contrôler le débit du gaz.

## Claims

1. Radiant tube burner with flue gas recirculation for heating an enclosure (1) delimited by a wall (10), this device comprising in a longitudinal axial direction (L) a section (Se) outside the enclosure (1) and a section (Si) inside the enclosure, which at the same time is divided into three internal sub-sections (Si1, Si2, Si3) one after the other at an increasing distance from the wall (10), and in a centripetal radial direction (R) an envelope (2) comprising an external casing (21) and an internal envelope tube (22), of which one end (220), which is at a distance from the wall (10), is closed, an exchanger (3) arranged in the envelope (2) extending over a part of the external section (Se) and over the first two internal sections (Si1, Si2), a recirculation tube (4) extending over the third internal section (Si3) at a radial distance from the envelope tube (22) with open ends going in (41) and coming out (42), which are relatively close to and relatively distant from the wall (10) of the enclosure respectively, a support tube (5) inside the exchanger (3), extending over a part of the external section (Se) and over the first internal section (Si1), a firebox tube (6) arranged in the exchanger (3), supported by the extension of the support tube (5), extending over the second internal section (Si2), and a central injection tube (7) conveying gas, extending at least into the support tube (5), crossing a partition (56) separating the support tube (5) from the firebox tube (6), the exchanger (3) comprising a separator tube (30), which with the support tube (5) and the firebox tube (6) defines a path (T1) for the intake of air starting at an intake inlet (211), which has been made in the casing (21), and ending in inlet ports (60), which have been made in the firebox tube (6), the separator tube (30), which with the envelope (2) defines a path (T2) for the removal of fumes ending at an outlet for removal (212), which has been made in the casing (21), and the firebox tube (6) ending in a nozzle (61) arranged opposite the end (41) of the recirculation tube (4) coming in, **characterised in that** the central injection tube (7) is supplied by two pipes (71, 72), the first of which (71) conveys at least gas and the second of which (72) conveys at least air, **in that** the central injection tube (7) ends at a burner (8) arranged in the firebox tube (6), coming out at the level of the nozzle (61), and **in that** a valve (710, 720) is interposed on at least one (72) of the pipes (71, 72) outside the casing (21).

2. Device according to claim 1, **characterised in that** the first pipe (71) conveys gas, **in that** the second pipe (72) conveys air and **in that** the central injection tube (7) is made up of a single injection pipe, into which the first and second pipes (71, 72) come out.

3. Device according to claim 2, **characterised in that** the valve (720) is interposed on the second pipe (72) to control the flow of air.

4. Device according to claim 1, **characterised in that** the first pipe (71) conveys gas, **in that** the second pipe (72) conveys a mixture of air and gas and **in that** the central injection tube (7) is made up of two concentric injection pipes, into which the first and second pipes (71, 72) come out respectively.

5. Device according to claim 4, **characterised in that** the valve (710) is interposed on the first pipe (71) to control the flow of gas.

## Patentansprüche

1. Strahlervorrichtung mit Gasbrenner und Verbrennungsgasrückführung zum Heizen eines Raums (1), der von einer Wand (10) begrenzt wird, wobei diese Vorrichtung in axialer Längsrichtung (L) einen außerhalb des Raums (1) befindlichen Abschnitt (Se) und einen Abschnitt (Si) aufweist, der zugleich innerhalb des Raums liegt und in drei innere Unterabschnitte (Si1, Si2, Si3) unterteilt ist, die mit zunehmendem Abstand von der Wand (10) aufeinander folgen, sowie in radialer zentripetaler Richtung (R) einen Mantel (2) mit einem Außengehäuse (21) und einem inneren Mantelrohr (22), von dem ein von der Wand (10) beabstandetes Ende (220) geschlossen ist, einen Tauscher (3), der in dem Mantel (2) angeordnet ist und sich über einen Teil des äußeren Abschnitts (Se) und über die ersten beiden inneren Abschnitte (Si1, Si2) erstreckt, ein Rückführungsrohr (4), das sich über den dritten Innenabschnitt (Si3) in radialem Abstand von dem Mantelrohr (22) erstreckt und ein offenes Eintritts- (41) und Austrittsende (42) aufweist, die relativ nahe bzw. relativ weit entfernt von der Wand (10) des Raums liegen, ein Halterohr (5), das innerhalb des Tauschers (3) liegt und sich über einen Teil des Außenabschnitts (Se) und über den ersten Innenabschnitt (Si1) erstreckt, ein Flammrohr (6), das in dem Tauscher (3) angeordnet ist, von dem Halterohr (5) in Verlängerung desselben gehalten wird und sich über den zweiten Innenabschnitt (Si2) erstreckt, und ein mittleres Einspritzrohr (7), welches das Gas leitet, sich zumindest in dem Halterohr (5) erstreckt und eine Trennwand (56) durchsetzt, welche das Halterohr (5) vom Flammrohr (6) trennt, wobei der Tauscher (3) ein Abscheiderohr (30) aufweist, das mit dem Halterohr (5) und dem Flammrohr (6) einen Lufteinlassweg (T1) definiert, der von einer in dem Gehäuse (21) ausgeführten Einlassbohrung (211) ausgeht und zu Auslassöffnungen (60) führt, die in dem Flammrohr (6) ausgebildet sind, wobei das Abscheiderohr (30) mit dem Mantel (2) einen Rauchgasableitweg (T2) definiert, der zu einer Ableitaustrittsbohrung (212) führt, die in dem Gehäuse (21) ausgebildet ist, und wobei das Flammrohr (6) mit einer Düse (61) endet, die dem Entrittsende (41) des Rückführungsrohrs (4) gegenüberliegend angeordnet ist, **dadurch gekennzeichnet, dass** das mittlere Einspritzrohr (7) über zwei Leitungen (71, 72) beaufschlagt wird, von denen die erste (71) zumindest Gas fördert und die zweite (72) zumindest Luft fördert, dass das mittlere Einspritzrohr (7) zu einem Brenner (8) führt, der in dem Flammrohr (6) angeordnet ist und im Bereich der Düse (61) ausmündet, und dass ein Ventil (710, 720) an zumindest einer der Leitungen (71, 82) außerhalb des Gehäuses (21) angeordnet ist.

2. Vorrichtung nach Anspruch 1, **dadurch gekennzeichnet, dass** die erste Leitung (71) Gas fördert, dass die zweite Leitung (72) Luft fördert und dass das mittlere Einspritzrohr (7) aus einem einzigen Einspritzrohrstab besteht, in welchem die erste und die zweite Leitung (71, 72) ausmünden.

3. Vorrichtung nach Anspruch 2, **dadurch gekennzeichnet, dass** das Ventil (720) an der zweiten Leitung (72) zum Kontrollieren des Luftdurchsatzes angeordnet ist.

4. Vorrichtung nach Anspruch 1, **dadurch gekennzeichnet, dass** die erste Leitung (71) Gas fördert, dass die zweite Leitung (72) ein Luft- und Gasgemisch fördert und dass das mittlere Einspritzrohr (7) aus zwei konzentrischen Einspritzrohrstäben besteht, in welchen jeweils die erste bzw. die zweite Leitung (71, 72) ausmündet.

5. Vorrichtung nach Anspruch 4, **dadurch gekennzeichnet, dass** das Ventil (710) an der ersten Leitung (71) zum Kontrollieren des Gasdurchsatzes angeordnet ist.
